# EUROPÄISCHE PATENTSCHRIFT

(11) **EP 2 800 982 B1**
(45) Veröffentlichungstag und Bekanntmachung des Hinweises auf die Patenterteilung: **05.04.2017**
(21) Anmeldenummer: 12780764.2
(22) Anmeldetag: 06.11.2012
(51) Int. Cl.: G01S 13/60, G01S 15/60, G01S 17/58

(54) **VERFAHREN UND VORRICHTUNG ZUR RADUNABHÄNGIGEN GESCHWINDIGKEITSMESSUNG BEI EINEM FAHRZEUG**
METHOD AND DEVICE FOR MEASURING THE SPEED OF A VEHICLE INDEPENDENTLY OF THE WHEELS
PROCÉDÉ ET DISPOSITIF POUR LA MESURE DE VITESSE INDÉPENDANTE DES ROUES, POUR UN VÉHICULE

(30) Priorität: 05.01.2012 DE 102012200139
(43) Veröffentlichungstag der Anmeldung: 12.11.2014
(73) Patentinhaber: Robert Bosch GmbH, 70442 Stuttgart (DE)
(72) Erfinder: BREUING, Holger, 74360 Ilsfeld (DE)
(86) Internationale Anmeldenummer: PCT/EP2012/071920
(87) Internationale Veröffentlichungsnummer: WO 2013/102507

(56) Entgegenhaltungen:
- EP-A1- 1 014 108

## Beschreibung

Die Erfindung betrifft ein Verfahren zum Bestimmen der Geschwindigkeit eines Fahrzeugs, insbesondere eines Schienenfahrzeugs. Ferner betrifft die Erfindung eine entsprechende Vorrichtung zum Bestimmen der Geschwindigkeit des Fahrzeugs.

### Stand der Technik

Zur Messung der Geschwindigkeit eines Schienenfahrzeugs werden unter anderem Sensoren eingesetzt, welche die Raddrehzahl ermitteln. Allerdings kann sich diese Messmethode bei bestimmten Betriebsbedingungen, wie zum Beispiel bei Steigungen, Beschleunigungs- bzw. Bremsvorgängen oder bei bestimmten Witterungsbedingungen als unzuverlässig zur Bestimmung der Fahr- bzw. Absolutgeschwindigkeit des Schienenfahrzeugs erweisen. Daher kommen in modernen Schienenfahrzeugen auch Sensoren zum Einsatz, welche die Reflektion optischer Strahlen oder akustischer Signale am Untergrund zur Bestimmung der Absolutgeschwindigkeit des Fahrzeugs nutzen. Auch bei dieser Messmethode kann die Zuverlässigkeit aufgrund externer Einflüsse, wie z.B. Verschmutzung der Sensoren oder witterungsbedingt reduzierter Reflektivität des Untergrunds, starken Schwankungen unterliegen.

Aus der EP 1014108 A1 ist ein Verfahren bekannt, bei welchem stationäre Objekte in der Umgebung eines Fahrzeugs mittels Radarstrahlen erfasst werden. Aus der gemessenen Relativgeschwindigkeit wird ein Kokkekturfaktor errechnet, welcher dann zur Korrektur eines Sensorsignals eines Raddrehzahlsensors verwendet wird.

Es ist daher Aufgabe der Erfindung, eine alternative oder ergänzende Messmethode zur Bestimmung der Absolutgeschwindigkeit eines Schienenfahrzeugs bereitzustellen. Diese Aufgabe wird durch ein Verfahren gemäß Anspruch 1 gelöst. Ferner wird die Aufgabe durch eine Vorrichtung gemäß Anspruch 12 gelöst. Weitere vorteilhafte Ausführungsform der Erfindung sind in den abhängigen Ansprüchen angegeben.

Gemäß der Erfindung ist ein Verfahren zum Bestimmen der Absolutgeschwindigkeit eines Schienenfahrzeugs vorgesehen, wobei wenigstens ein in der Umgebung des Schienenfahrzeugs befindliches Objekt erfasst und eine Relativgeschwindigkeit des erfassten Objekts in Bezug auf das Schienenfahrzeug gemessen wird. Dabei wird die Absolutgeschwindigkeit des Schienenfahrzeugs anhand der Relativgeschwindigkeit des Objekts bestimmt. Die Nutzung der Relativbewegung von Objekten im Umfeld des Fahrzeugs erlaubt eine von der Untergrundbeschaffenheit und den Witterungsverhältnissen unabhängig Geschwindigkeitsmessung.

In einer Ausführungsform wird dabei bewertet, ob es sich bei dem erfassten Objekt um ein stationäres oder bewegtes Objekt handelt. Die Relativgeschwindigkeit des erfassten Objekts wird dabei nur dann zur Bestimmung der Absolutgeschwindigkeit des Fahrzeugs verwendet, wenn das betreffende Objekt als stationär bewertet wurde. Durch die Einschränkung auf stationäre Objekte kann die Genauigkeit der Geschwindigkeitsbestimmung erhöht werden.

In einer weiteren Ausführungsform ist vorgesehen, dass die Relativgeschwindigkeit des erfassten Objekts mit einer Referenzgeschwindigkeit verglichen wird. Die betreffende Relativgeschwindigkeit wird nur dann zur Bewertung der Absolutgeschwindigkeit des Fahrzeugs verwendet, wenn sie im Wesentlichen der Referenzgeschwindigkeit entspricht. Durch den Vergleich mit einer Referenzgeschwindigkeit lassen sich die gemessenen Relativgeschwindigkeiten verschiedener Objekte sehr einfach auswerten. Damit wird das Erkennen stationärer bzw. geeigneter Objekte vereinfacht.

Eine weitere Ausführungsform sieht vor, dass die Absolutgeschwindigkeit des Fahrzeugs wiederkehrend bestimmt wird und dass als Referenzgeschwindigkeit jeweils der zuletzt ermittelte Wert der Absolutgeschwindigkeit des Fahrzeugs verwendet wird. Hierdurch kann insbesondere in Situationen, in denen die aktuelle Absolutgeschwindigkeit des Fahrzeugs sich nur geringfügig von der zuletzt ermittelten Absolutgeschwindigkeit unterscheidet, die Genauigkeit bei der Erkennung geeigneter bzw. stationärer Objekte verbessert werden.

In einer weiteren Ausführungsform ist vorgesehen, dass die Relativgeschwindigkeiten mehrerer in der Umgebung des Fahrzeugs erfasster Objekte gemessen werden und dass die Referenzgeschwindigkeit anhand eines aus den Relativgeschwindigkeiten der erfassten Objekte ermittelten Mittelwerts ermittelt wird. Durch die Mittelwertbildung können Abweichungen der Relativgeschwindigkeiten einzelner Objekte relativ einfach reduziert werden. Dabei liefert der Mittelwert insbesondere in Situationen, in denen einer großen Anzahl geeigneter bzw. stationärer Objekte eine geringe Anzahl ungeeigneter bzw. sich bewegender Objekte gegenübersteht, einen hinreichend genauen Referenzwert für die Bewertung der erfassten Objekte.

Eine weitere Ausführungsform sieht vor, dass die Relativgeschwindigkeiten mehrerer in der Umgebung des Fahrzeugs erfasster Objekte gemessen werden, wobei für jedes der erfassten Objekte eine individuelle Wahrscheinlichkeit ermittelt wird, dass es sich dabei um ein stationäres Objekt handelt. Ferner werden bei der Bestimmung der Absolutgeschwindigkeit des Fahrzeugs nur Objekte mit der höchsten Wahrscheinlichkeit berücksichtigt. Die Zuweisung einer individuellen Wahrscheinlichkeit zu jedem Objekt erlaubt eine einfache Klassifizierung bzw. Einstufung der erfassten Objekte. Ferner wird die Auswahl geeigneter Objekte vereinfacht, indem aus einer Menge potentiell geeigneter Objekte nur diejenigen mit der höchsten Wahrscheinlichkeit berücksichtigt werden.

In einer weiteren Ausführungsform wird einem Objekt eine umso höhere Wahrscheinlichkeit zugeordnet, dass es sich um ein stationäres Objekt handelt, je größer die Übereinstimmung zwischen der für dieses Objekt ermittelten Relativgeschwindigkeit und der Referenzgeschwindigkeit ausfällt. Grundsätzlich lässt sich jedem erkannten Objekt eine individuelle Wahrscheinlichkeit, dass es sich um ein stationäres Objekt handelt, anhand verschiedener Kriterien zuordnet, unter anderem auch anhand der Form oder der Position des erkannten Objekts. Die Korrelation der einem Objekt zugeordneten Wahrscheinlichkeit und der Übereinstimmung zwischen der Relativgeschwindigkeit des betreffenden Objekts und der Referenzgeschwindigkeit ermöglicht jedoch eine besonders einfache Auswertung.

Ferner sieht eine weitere Ausführungsform vor, dass die Referenzgeschwindigkeit anhand einer mittels eines Referenzsensors ermittelten Geschwindigkeit des

Fahrzeugs bestimmt wird. Zur Bestimmung der Referenzgeschwindigkeit nutzt der Referenzsensor dabei z. B. die Reflexion optischer Strahlung am Untergrund, die Reflexion von Schallwellen am Untergrund, die Raddrehzahl und/oder eine satellitengestützte Navigation. Durch die Verwendung eines zusätzlichen Sensors zur Bestimmung der Referenzgeschwindigkeit steht bei der Bewertung der erfassten Objekte ein besonders aktueller Referenzwert zur Verfügung. Ferner kann sich die für die Ermittlung des Referenzwerts notwendige Rechenleistung reduzieren, da hierbei in der Regel keine aufwändigen Auswertealgorithmen verwendet werden müssen.

Eine weitere Ausführungsform sieht vor, dass die Fahrgeschwindigkeit des Fahrzeugs anhand der gemessenen Relativgeschwindigkeit von Objekten bestimmt wird, welche sich in Fahrtrichtung vor und/oder hinter dem Fahrzeug befinden. Die Verwendung von in Fahrtrichtung vor dem Fahrzeug befindlichen Objekten erlaubt die Nutzung bereits existierender Sensoren bzw. Sensorsysteme, insbesondere Fahrassistenzsysteme, wodurch der apparative Aufbau der Messanordnung verringert wird. Die Ausrichtung der Messung auf Objekte hinter dem Fahrzeug erlaubt es, auch solche Objekte zu erfassen, welche bei frontaler Messung kein ausreichendes Sensorsignal liefern, wie z. B . verdeckte Objekte oder durch Schnee- oder Sandvenivehungen nicht ausreichend erkennbare Objekte. Hingegen liefert die gleichzeitige Erfassung von Objekten vor und hinter dem Fahrzeug eine höhere Anzahl geeigneter Messungen und damit grundsätzlich auch eine Verbesserung der Genauigkeit bei der Bestimmung der Fahrzeuggeschwindigkeit.

Im Folgenden wird die Erfindung anhand von Figuren näher beschrieben. Es zeigen:
Figur 1 schematisch eine Fahrsituation, bei der ein fahrendes Schienenfahrzeug, welches mit einer erfindungsgemäßen Messvorrichtung ausgestattet ist, mehrere vor ihm angeordnete stationäre Objekte erfasst;
Figur 2 schematisch eine weitere Fahrsituation, bei der ein fahrendes Schienenfahrzeug, welches mit einer erfindungsgemäßen Messvorrichtung ausgestattet ist, zwei stationäre Objekte und ein bewegtes Objekt erfasst;
Figur 3 schematisch eine Fahrsituation, in der zum Bestimmen der Absolutgeschwindigkeit des Fahrzeugs sowohl die vor dem Fahrzeug angeordneten Objekte als auch die hinter dem Fahrzeug angeordneten Objekte sensorisch erfasst werden; und
Figur 4 schematisch eine erfindungsgemäße Messvorrichtung zum Bestimmen der Absolutgeschwindigkeit eines Fahrzeugs anhand der Relativgeschwindigkeit von Objekten in der Umgebung des Fahrzeugs.

Zur Bestimmung der Fahrgeschwindigkeit eines Fahrzeugs wird bei dem erfindungsgemäßen Konzept die Relativgeschwindigkeit von Objekten in der Umgebung des Fahrzeugs mithilfe eines oder mehrerer Sensoren gemessen. Durch Plausibilisierung wird dann im Fahrzeug die eigene Geschwindigkeit über die Relativgeschwindigkeit zu den erfassten Objekten, insbesondere zu den stationären Objekten, bestimmt.

Als Sensoren im Sinne der Erfindung kommen grundsätzlich alle geeigneten Mess-, Sensor- und Detektionseinrichtungen in Frage, welche die Umgebung des Fahrzeugs optisch, akustisch oder elektromagnetisch erfassen. Insbesondere können hierfür Messmethoden verwendet werden, mit denen das Erfassen der Objekte und das Messen der Relativgeschwindigkeit der erfassten Objekte in einem Schritt erfolgen kann. Alternativ ist es auch möglich, zum Erfassen der Objekte und zum Messen ihrer Relativgeschwindigkeit verschiedene Methoden zu verwenden. So kann im ersten Fall beispielsweise mit Hilfe eines Radars sowohl die Position eines Objekts als auch seine Relativgeschwindigkeit relativ zum Fahrzeug gemessen werden. Hierfür eignet sich beispielsweise ein frequenzmoduliertes Radar, wie das FMCW-Radar (frequency-modulated-continios-wave). Die Modulation des Radarsignals erlaubt dabei, eine Laufzeitmessung durch zeitliche Korrelation des ausgesendeten Signals mit dem vom Objekt reflektierten und im Gerät empfangenen Signal und damit eine absolute Entfernungsmessung des betreffenden Objekts. Zur Bestimmung der genauen Position eines Objekts in einem Weltkoordinatensystem wird in der Regel neben dem radialen Abstand des Objekts zum Fahrzeug auch eine Richtungsinformation (Azimutalwinkel) des betreffenden Objekts in Bezug auf die Fahrtrichtung gemessen. Bei scannenden Radarsystemen ergibt sich dieser Raumwinkel automatisch aus der aktuellen Ausrichtung der Empfangsantenne. Hingegen wird die Richtungsinformation bei einem Radarsystem mit statischen Antennen durch die Verteilung der Intensitäten der von den verschiedenen Antennen empfangenen Signale ermittelt.

Im Unterschied zu modulierten Radarsignalen kann mit Hilfe eines unmodulierten Radarsignals unter Ausnutzung des Doppler-Effekts neben der radialen Geschwindigkeit nicht ohne Weiteres die Position eines Objekts gemessen werden. Die zur Bestimmung der genauen Position des Objekts notwendige Abstandsmessung ist bei diesem sogenannten Doppler-Radar aufgrund der fehlenden Zeitbasis im Radarsignal prinzipiell nicht möglich.

Neben den simultanen Messungen der Entfernung bzw. Position und Geschwindigkeit eines Objekts relativ zum Fahrzeug mit Hilfe eines einzigen modulierten Radars ist es ferner möglich, die Positions- und Geschwindigkeitsmessung eines Objekts mit Hilfe mehrerer Sensor- bzw. Messeinrichtungen durchzuführen. Beispielsweise lässt sich mit Hilfe einer optischen Messeinrichtung, welche zwei oder mehrere Videokameras umfasst, die Relativposition eines Objekts relativ einfach ermitteln. Hingegen kann die relative Geschwindigkeit des erfassten Objekts mithilfe einer weiteren Messeinrichtung, wie z.B. ein Doppler-Radar oder eine akustische Doppler-Messeinrichtung, gemessen werden.

Mit Hilfe einer stereoskopisch arbeitenden optischen Messeinrichtung lässt sich jedoch auch die zeitliche Positionsänderung des Objekts und damit seine relative Geschwindigkeit erfassen.

Somit kann die Bestimmung der Relativgeschwindigkeit eines Objekts relativ zum Fahrzeug je nach Messmethode grundsätzlich auf unterschiedliche Weise erfolgen. Bei Messmethoden, welche die absolute bzw. relative Position eines Objekts messen, kann die Relativgeschwindigkeit des betreffenden Objekts anhand der Positionsänderung ermittelt werden, welche das jeweilige Objekt relativ zum Fahrzeug 100 in einer vorgegebenen Zeit vollführt. Hingegen wird die Relativgeschwindigkeit eines Objekts bei einer Messmethode, welche die radiale Geschwindigkeit des betreffenden Objekts relativ zum Fahrzeug misst, durch geometrische Umrechnung der gemessenen radialen Geschwindigkeit unter Zuhilfenahme des gemessenen Raumwinkels berechnet.

Das erfindungsgemäße Konzept wird im Folgenden anhand einer typischen

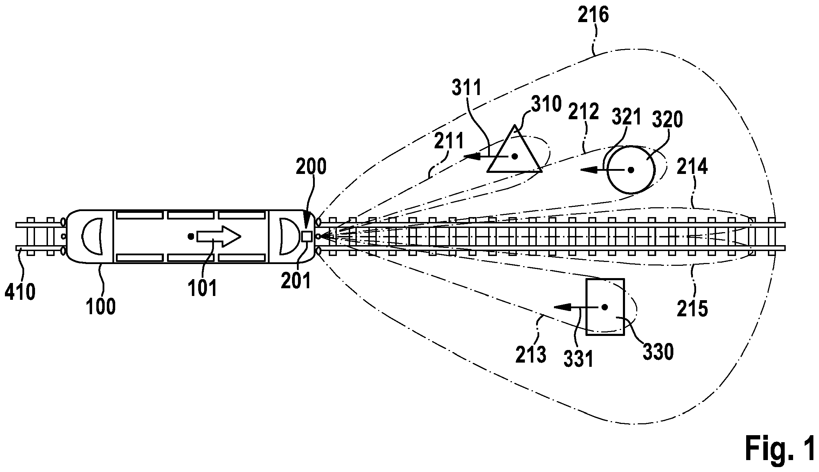

Fahrsituation erläutert, wobei mehrere in Fahrtrichtung vor dem Fahrzeug liegende bzw. während der Fahrt vor dem Fahrzeug auftauchende Objekte gleichzeitig oder kurz nacheinander erfasst werden. Hierzu zeigt die Figur 1 ein mit einer erfindungsgemäßen Messvorrichtung 200 zur Bestimmung der Fahrgeschwindigkeit ausgestattetes Fahrzeug 100, welches im vorliegenden Beispiel als ein entlang der Schienen 410 fahrendes Schienenfahrzeug ausgebildet ist. Das Fahrzeug 100 bewegt sich dabei, wie mittels des dicken Pfeils 101 angedeutet ist, von links nach rechts. In Fahrtrichtung vor dem Fahrzeug sind drei verschiedene Objekte 310, 320, 330 angeordnet. Hierbei handelt es sich um stationäre Objekte, wobei als stationäres Objekt jedes geeignete Objekt in Frage kommt, dessen geografische Position sich innerhalb des für die Messung relevanten Zeitraums nicht ändert. Hierzu zählen beispielweise Bäume, Signalzeichen, Strommasten, Gebäude, sonstige Bauwerke oder stehende Fahrzeuge.

Zur Messung der Relativgeschwindigkeit der Objekte 310, 320, 330 ist das Fahrzeug 100 mit einer erfindungsgemäßen Messvorrichtung 200 ausgestattet, welches im vorliegenden Fall eine im Frontbereich des Fahrzeugs 100 angeordnete Sensoranordnung 201 umfasst. Die Sensoranordnung 201 ist dabei ausgebildet, vor dem Fahrzeug 100 auftauchende Objekte zu erfassen und ihre die Geschwindigkeit relativ zum Fahrzeug 100 zu messen. Hierzu weist die Sensoranordnung 201 wenigstens einen Sensor 210 auf, dessen Messkegel Objekte vor dem Fahrzeug 100 erfasst.

Wie in der Figur 1 gezeigt ist, werden vor dem Fahrzeug auftauchende Objekte 310, 320, 330 jeweils von wenigstens einem Messkegel einer Mess- bzw. Sensoreinrichtung 210 der im vorderen Teil des Fahrzeugs 100 angeordneten Sensoranordnung 201 erfasst. Jeder der hier beispielhaft keulenförmig dargestellten Erfassungskegel 211, 212, 213, 214, 215, 216 entspricht dabei einem räumlichen Mess- bzw. Erfassungsbereich einer Sensoreinrichtung 210 der betreffenden Sensoranordnung 201. Je nach Anwendung kann die Sensoranordnung 201 mehrere Sensoreinrichtungen umfassen, deren Erfassungskegel in verschiedenen Winkeln angeordnet oder azimutal schwenkbar gleichzeitig mehrere Objekte erfassen können. Alternativ hierzu ist es auch möglich, den Bereich vor dem Fahrzeug 100 mit einer scannenden Sensoreinrichtung zu überwachen, wobei ein vorgegebener Raumwinkel von der Mess- bzw. Erfassungskegel der scannenden Sensoreinrichtung periodisch abgetastet wird. In diesem Fall werden die einzelnen Objekte 310, 320, 330 nacheinander erfasst. Hierfür kommen beispielsweise ein scannendes Radar oder ein Laser-Scanner in Frage.

Wie mit Hilfe des breiten Erfassungskegels 216 angedeutet ist, können ferner auch Mess- bzw. Sensoreinrichtungen zum Einsatz kommen, die gleichzeitig den gesamten in Frage kommenden Raumbereich vor dem Fahrzeug erfassen. Dies kann z. B. optisch mit Hilfe einer oder mehrerer Videokameras erfolgen. Auch ein starres Radarsystem oder ein akustisches Doppler-Messgerät mit einem entsprechend breiten Detektionswinkel kommt hierfür grundsätzlich in Frage.

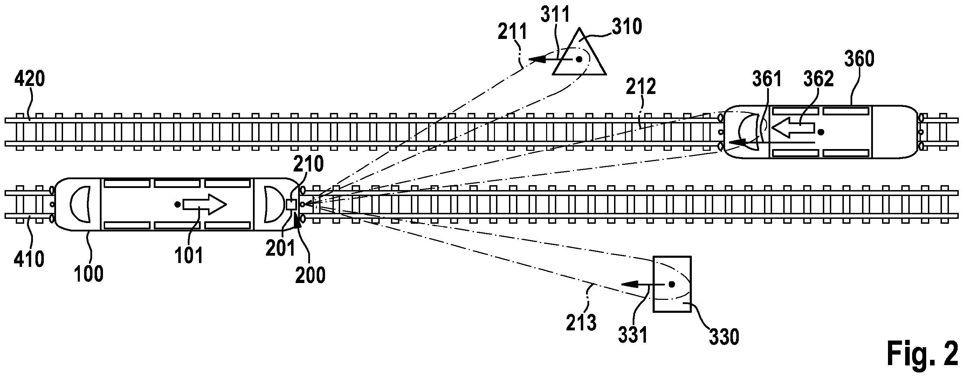

Die **Figur 2** zeigt eine weitere Fahrsituation des mittels der erfindungsgemäßen Messvorrichtung 200 ausgestatteten Fahrzeugs 100. Hierbei erfassen ein oder mehrere Sensoren 210 der vorderen Sensoranordnung 201 neben zwei stationären Objekten 310, 320 auch ein nicht stationäres Objekt 360. Bei dem nicht stationären Objekt 360 handelt es sich um einen auf einer benachbarten Schienenstrecke 420 dem Fahrzeug 100 entgegen kommendes zweites Schienenfahrzeug. Die Eigenbewegung des zweiten Schienenfahrzeugs 360 ist dabei mittels des dicken Pfeils 362 angedeutet, wobei die Orientierung und Länge des Pfeils 362 der Richtung und Geschwindigkeit des betreffenden Fahrzeugs 360 entsprechen. Analog zu der Figur 1 sind die mittels der Sensoranordnung 201 ermittelten Relativgeschwindigkeiten der beiden stationären Objekte 310, 330 und des nicht stationären Objekts 360 jeweils mittels eines dünnen Pfeils 311, 331, 361 veranschaulicht. Während die Relativgeschwindigkeiten 311, 331 der beiden stationären Objekte 310, 330 im Wesentlichen der aktuellen Fahrgeschwindigkeit 101 des Fahrzeugs 100 entsprechen, wird für das zweite Schienenfahrzeug 360 aufgrund seiner Eigenbewegung 362 eine deutlich höhere Relativgeschwindigkeit 361 gemessen. Die Steuer- und Auswerteeinrichtung der Messvorrichtung 200 bewertet daher das Schienenfahrzeug 360 aufgrund seiner hohen Relativgeschwindigkeit als ein nicht stationäres bzw. bewegtes und daher nicht geeignetes Objekt. Infolge dessen wird die betreffende Relativgeschwindigkeit nicht zur Bestimmung der Fahrgeschwindigkeit des Fahrzeugs 100 herangezogen. Hingegen werden die beiden stationären Objekte 310, 330 aufgrund ihrer Relativgeschwindigkeiten als stationär bewertet. Infolgedessen verwendet die Steuer- und Auswerteeinrichtung die gemessenen Relativgeschwindigkeiten der beiden stationären Objekte 310, 330 zur Bestimmung der aktuellen Fahrgeschwindigkeit des Fahrzeugs 100.

Die Bewertung als stationäres Objekt oder als nicht stationäres bzw. bewegtes Objekt erfolgt vorzugsweise durch einen Vergleich der gemessenen Relativgeschwindigkeit eines Objekts mit einem geeigneten Referenzwert. Als Referenzwert eignet sich hierbei beispielsweise der zuletzt ermittelte Wert der Fahrgeschwindigkeit des Fahrzeugs 100. Dies ist insbesondere dann günstig, wenn der Zeitraum seit der letzten Bestimmung der Fahrgeschwindigkeit so kurz ausfällt, dass seitdem nur eine relativ geringe Änderung der Fahrgeschwindigkeit aufgrund eines Beschleunigungs- oder Abbremsvorgangs erfolgt sein kann. Sofern genügend Objekte gleichzeitig oder kurz nacheinander für eine Messung zur Verfügung stehen, kann als Referenzwert auch der Mittelwert der gemessenen Relativgeschwindigkeiten der jeweiligen Objekte verwendet werden. Alternativ oder unterstützend kann der Referenzwert auch mit Hilfe einer anderen zur Geschwindigkeitsmessung geeigneten Methode ermittelt werden, wobei als Referenz jedes geeignete Geschwindigkeitssignal mit ausreichender Genauigkeit (z. B. 10%) genutzt werden kann. So ist es beispielsweise möglich, die Referenzgeschwindigkeit mit Hilfe eines die Raddrehzahl messenden Sensors zu ermitteln. Auch ein die Fahrgeschwindigkeit mittels Reflexion am Untergrund nutzender Sensor kann eine geeignete Referenzgeschwindigkeit liefern. Schließlich ist es möglich, die Referenzgeschwindigkeit mittels einer satellitengestützten Sensoreinrichtung (z. B. GPS) zu gewinnen.

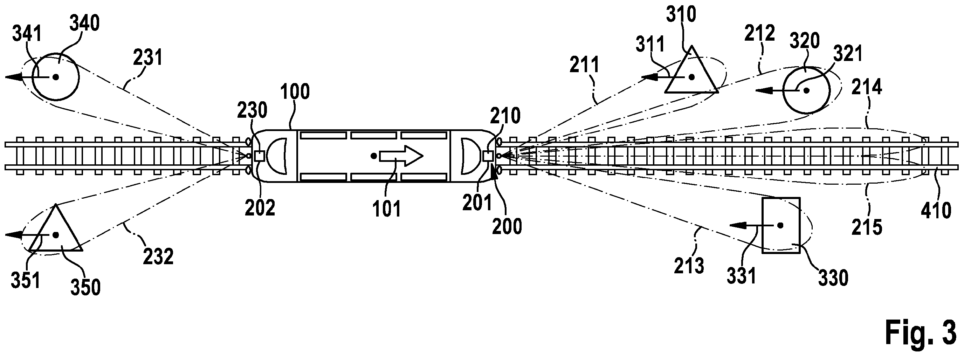

Bei den in den Figuren 1 und 2 beispielhaft gezeigten Fahrzeugen werden lediglich jeweils vor dem Fahrzeug befindliche Objekte zur Messung der eigenen Fahrgeschwindigkeit genutzt. Jedoch ist es auch möglich, die eigene Fahrgeschwindigkeit mit Hilfe von Objekten zu bestimmen, welche sich hinter dem Fahrzeug befinden. Hierzu zeigt **Figur 3** beispielhaft ein Schienenfahrzeug 100, welches neben der vorderen Sensoranordnung 201 auch eine nach hinten gerichtete Sensoranordnung 202 umfasst. Die im Heckbereich des Fahrzeugs 100 angeordnete hintere Sensoranordnung 202 umfasst dabei wenigstens eine in Fahrtrichtung nach hinten gerichtete Sensoreinrichtung 230 zum Messen der Relativgeschwindigkeit von Objekten, welches sich hinter dem Fahrzeug befinden. Beispielhaft sind zwei stationäre Objekte 340, 350 hinter dem Fahrzeug 100 dargestellt. Die beiden an der Fahrstrecke 410 angeordneten hinteren Objekte 340, 350 werden, wie mittels der gestrichelt gezeichneten Erfassungskegel 231, 232 angedeutet ist, von wenigstens einer Sensoreinrichtung 230 der hinteren Sensoranordnung 202 erfasst. Dabei wird die Relativgeschwindigkeit 341, 351 der betreffenden Objekte 340, 350 gemessen und die Messergebnisse der Steuer- und Auswerteeinrichtung der Messvorrichtung 200 zur Bestimmung der Eigengeschwindigkeit des Fahrzeugs 100 zugeführt.

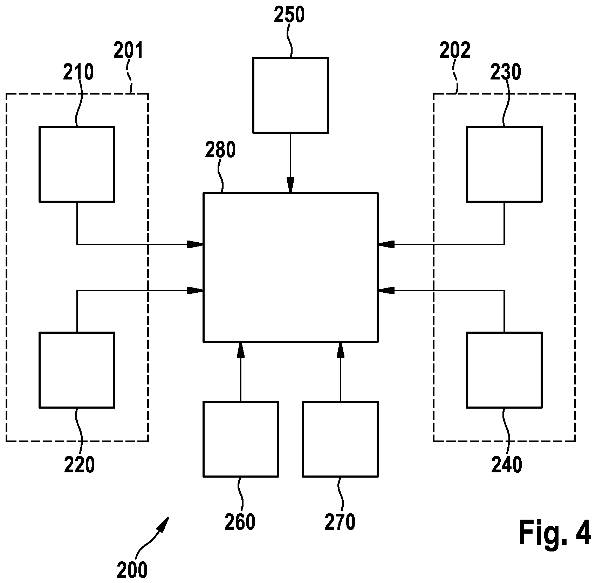

Die **Figur 4** zeigt beispielhaft eine Messvorrichtung 200 gemäß der Erfindung. Die erfindungsgemäße Messvorrichtung 200 umfasst dabei eine vordere Sensoranordnung 201 mit wenigstens einer Sensoreinrichtung zum Erfassen von Objekten und zum Messen der Relativgeschwindigkeit der erfassten Objekte. Im vorliegenden Fall umfasst die vordere Sensoranordnung 201 insgesamt zwei Sensoreinrichtungen 210, 220, beispielsweise eine Videokamera und ein Radargerät. Optional oder alternativ zur ersten Sensoranordnung 201 umfasst die Messvorrichtung 200 ferner eine zweite Sensoranordnung mit ebenfalls einer oder mehreren Sensoreinrichtungen 230, 240 zum Erfassen von Objekten hinter dem Fahrzeug. Die Sensoreinrichtungen 210, 220, 230, 240 der beiden Sensoranordnungen 201, 202 sind vorzugsweise an eine gemeinsame Steuer- und Auswerteeinrichtung 280 angeschlossen, welche die Informationen der einzelnen Sensoreinrichtungen 210, 220, 230, 240 auswertet und daraus die aktuelle Fahrgeschwindigkeit des Fahrzeugs ermittelt. Hierbei handelt es sich beispielsweise um eine Recheneinrichtung, welche mittels geeigneter Algorithmen die Auswertung der Messergebnisse vornimmt. Bei der Auswertung können die gemessenen Relativgeschwindigkeiten mit einem Referenzwert verglichen werden. Hierbei können lediglich diejenigen Relativgeschwindigkeiten zur Bestimmung der aktuellen Fahrgeschwindigkeit verwendet werden, welche nicht mehr als einen vorgegebenen Betrag von dem Referenzwert abweichen. Ferner kann jedem Objekt anhand seiner Relativgeschwindigkeit eine individuelle Wahrscheinlichkeit dafür zugeteilt werden, dass es sich hierbei um ein stationäres Objekt handelt. Dabei werden zur Bestimmung der aktuellen Fahrgeschwindigkeit nur die Relativgeschwindigkeiten derjenigen Objekte herangezogen, welche die höchste Wahrscheinlichkeit aufweisen. Alternativ hierzu kann die aktuelle Fahrgeschwindigkeit aus dem Mittelwert einer Anzahl gemessener Relativgeschwindigkeiten ermittelt werden.

Die Messvorrichtung 200 kann ferner zusätzliche Mess- bzw. Sensoreinrichtungen umfassen, die zur Verifikation der Messergebnisse bzw. zum Bereitstellen eines Referenzwertes dienen. In der Figur 4 ist beispielhaft ein satellitengestützte Sensoreinrichtung 250, ein Raddrehzahlmesser 260 sowie ein die Reflexion von Strahlung am Untergrund nutzender Doppler-Geschwindigkeitsmessgerät 270 dargestellt.
Das erfindungsgemäße Konzept ermöglicht eine hohe Verfügbarkeit des Geschwindigkeitssignals. Dabei erlaubt der flexible Aufbau der Messvorrichtung einen einfachen Einbau in Fahrzeugen. So ist es beispielsweise möglich die Sensoreinrichtungen an besonders geschützten Einbauorten unterzubringen.

Obwohl die Erfindung im Detail durch die bevorzugten Ausführungsbeispiele näher illustriert und beschrieben wurde, ist die Erfindung nicht durch die offenbarten Beispiele eingeschränkt. Vielmehr können hieraus auch andere Variationen vom Fachmann abgeleitet werden, ohne den Schutzumfang der Erfindung zu verlassen. Insbesondere können zur Messung der Relativgeschwindigkeit von stationären sowie nicht stationären Objekten neben den hier explizit beschriebenen Messmethoden grundsätzlich auch andere geeignete Messmethoden zum Einsatz kommen. Auch jede sinnvolle Kombination der verschiedenen Messmethoden kommt hierfür grundsätzlich in Frage.

## Patentansprüche

1. Verfahren zum Bestimmen der Geschwindigkeit (101) eines Fahrzeugs (100),
wobei in der Umgebung des Fahrzeugs (100) befindliche Objekte (310, 320, 330, 340, 350, 360) erfasst und ihre Relativgeschwindigkeiten in Bezug auf das Fahrzeug (100) gemessen werden, und
wobei die Geschwindigkeit (101) des Fahrzeugs (100) anhand der Relativgeschwindigkeiten (311, 321, 331, 341, 351, 361) der Objekte (310, 320, 330, 340, 350, 360) bestimmt wird,
**dadurch gekennzeichnet,**
**dass** für jedes der erfassten Objekte (310, 320, 330, 340, 350, 360) eine individuelle Wahrscheinlichkeit ermittelt wird, dass es sich dabei um ein stationäres Objekt handelt,
wobei bei der Bestimmung der Geschwindigkeit (101) des Fahrzeugs (100) nur diejenigen Objekte (310, 320, 330, 340, 350, 360) mit der höchsten Wahrscheinlichkeit berücksichtigt werden.

2. Verfahren nach Anspruch 1,
**dadurch gekennzeichnet,**
**dass** einem Objekt (310, 320, 330, 340, 350, 360) eine umso höhere Wahrscheinlichkeit zugeordnet wird, dass es sich dabei um ein stationäres Objekt handelt, je größer die Übereinstimmung zwischen der für dieses Objekt (310, 320, 330, 340, 350, 360) ermittelten Relativgeschwindigkeit (311, 321, 331, 341, 351, 361) und der Referenzgeschwindigkeit ausfällt.

3. Verfahren nach Anspruch 1 oder 2,
**dadurch gekennzeichnet,**
**dass** die Wahrscheinlichkeit, dass es sich bei einem erkannten Objekt (310, 320, 330, 340, 350, 360) um ein stationäres Objekt handelt, einem erkannten Objekt (310, 320, 330, 340, 350, 360) anhand der Form oder Position des jeweiligen Objekts (310, 320, 330, 340, 350, 360) zugeordnet wird.

4. Verfahren nach einem der vorhergehenden Ansprüche,
**dadurch gekennzeichnet,**
**dass** bewertet wird, ob es sich bei dem erfassten Objekt (310, 320, 330, 340, 350, 360) um ein stationäres oder bewegtes Objekt handelt, und
wobei die Relativgeschwindigkeit (311, 321, 331, 341, 351, 361) des erfassten Objekts (310, 320, 330, 340, 350, 360) nur dann zur Bestimmung der Geschwindigkeit (101) des Fahrzeugs (100) verwendet wird, wenn das betreffende Objekt (310, 320, 330, 340, 350, 360) als stationär bewertet wurde.

5. Verfahren nach einem der vorhergehenden Ansprüche,
**dadurch gekennzeichnet,**
**dass** die Relativgeschwindigkeit (311, 321, 331, 341, 351, 361) des erfassten Objekt (310, 320, 330, 340, 350, 360) mit einer Referenzgeschwindigkeit verglichen wird, und
wobei die betreffende Relativgeschwindigkeit (311, 321, 331, 341, 351, 361) nur dann zur Bestimmung der Geschwindigkeit (101) des Fahrzeugs (100) verwendet wird, wenn sie im Wesentlichen der Referenzgeschwindigkeit entspricht.

6. Verfahren nach Anspruch 5,
**dadurch gekennzeichnet,**
**dass** die Geschwindigkeit (101) des Fahrzeugs (100) wiederkehrend bestimmt wird, und
wobei als Referenzgeschwindigkeit jeweils der zuletzt ermittelte Wert der Geschwindigkeit (101) des Fahrzeugs (100) verwendet wird.

7. Verfahren nach Anspruch 5 oder 6,
**dadurch gekennzeichnet,**
**dass** die Relativgeschwindigkeiten (311, 321, 331, 341, 351, 361) mehrerer in der Umgebung des Fahrzeugs (100) erfasster Objekte (310, 320, 330, 340, 350, 360) gleichzeitig oder nacheinander gemessen werden, wobei die Referenzgeschwindigkeit anhand eines aus den Relativgeschwindigkeiten (311, 321, 331, 341, 351, 361) der erfassten Objekte (310, 320, 330, 340, 350, 360) gebildeten Mittelwerts ermittelt wird.

8. Verfahren nach einem der vorhergehenden Ansprüche,
**dadurch gekennzeichnet,**
**dass** die Referenzgeschwindigkeit anhand einer mittels eines Referenzsensors (250, 260, 270) ermittelten Geschwindigkeit des Fahrzeugs (100) bestimmt wird, wobei der Referenzsensor (250, 260, 270) die Reflexion optischer Strahlung am Untergrund, die Reflexion von Schallwellen am Untergrund, die Raddrehzahl und/oder Satellitennavigation zur Bestimmung der Referenzgeschwindigkeit nutzt.

9. Verfahren nach einem der vorhergehenden Ansprüche,
**dadurch gekennzeichnet,**
**dass** die Geschwindigkeit (101) des Fahrzeugs (100) anhand der gemessenen Relativgeschwindigkeit (311, 321, 331, 341, 351, 361) von Objekten (310, 320, 330, 340, 350, 360) bestimmt wird, welche sich in Fahrtrichtung vor und/oder hinter dem Fahrzeug (100) befinden.

10. Verfahren nach einem der vorhergehenden Ansprüche,
**dadurch gekennzeichnet,**
**dass** zur Erfassung der Objekte (310, 320, 330, 340, 350, 360) in der Umgebung des Fahrzeugs (100) mithilfe eines optischen, akustischen und/oder radargestützten Messverfahrens erfolgt.

11. Verfahren nach einem der vorhergehenden Ansprüche,
**dadurch gekennzeichnet,**
**dass** die Messung der Relativgeschwindigkeit (311, 321, 331, 341, 351, 361) der erfassten Objekte (310, 320, 330, 340, 350, 360) mithilfe eines auf dem Dopplereffekt basierenden Messverfahrens erfolgt.

12. Vorrichtung zum Bestimmen der Geschwindigkeit (101) eines Fahrzeugs (100) umfassend:
- eine erste Sensoreinrichtung (210, 230) zum Erfassen von Objekten (310, 320, 330, 340, 350, 360) in der Umgebung des Fahrzeugs (100),
- eine zweite Sensoreinrichtung (220, 240) zum Messen der Relativgeschwindigkeit (311, 321, 331, 341, 351, 361) des erfassten Objekts (310, 320, 330, 340, 350, 360) in Bezug auf das Fahrzeug (100), und
- eine Auswerteeinrichtung (280) zum bestimmen der Geschwindigkeit (101) des Fahrzeugs (100) anhand der gemessenen Relativgeschwindigkeit (311, 321, 331, 341, 351, 361) des Objekts (310, 320, 330, 340, 350, 360),
dass die Auswerteeinrichtung (280) ausgebildet ist, für jedes der erfassten Objekte (310, 320, 330, 340, 350, 360) eine individuelle Wahrscheinlichkeit zu ermitteln, dass es sich dabei um ein stationäres Objekt handelt,
wobei die Auswerteeinrichtung (280) ferner ausgebildet ist, bei der Bestimmung der Geschwindigkeit (101) des Fahrzeugs (100) nur diejenigen Objekte (310, 320, 330, 340, 350, 360) mit der höchsten Wahrscheinlichkeit zu berücksichtigen.

## Claims

1. Method for determining the speed (101) of a vehicle (100),
objects (310, 320, 330, 340, 350, 360) in the environment of the vehicle (100) being detected and their relative speeds with respect to the vehicle (100) being measured, and
the speed (101) of the vehicle (100) being determined using the relative speeds (311, 321, 331, 341, 351, 361) of the objects (310, 320, 330, 340, 350, 360),
**characterized in that**
an individual probability of the object being a stationary object is determined for each of the detected objects (310, 320, 330, 340, 350, 360), only those objects (310, 320, 330, 340, 350, 360) with the highest probability being taken into account when determining the speed (101) of the vehicle (100).

2. Method according to Claim 1,
**characterized in that**
an object (310, 320, 330, 340, 350, 360) is assigned a higher probability of being a stationary object, the greater the correspondence between the relative speed (311, 321, 331, 341, 351, 361) determined for this object (310, 320, 330, 340, 350, 360) and the reference speed.

3. Method according to Claim 1 or 2,
**characterized in that**
the probability of a detected object (310, 320, 330, 340, 350, 360) being a stationary object is assigned to a detected object (310, 320, 330, 340, 350, 360) using the shape or position of the respective object (310, 320, 330, 340, 350, 360).

4. Method according to one of the preceding claims,
**characterized in that**
it is assessed whether the detected object (310, 320, 330, 340, 350, 360) is a stationary or moving object,
the relative speed (311, 321, 331, 341, 351, 361) of the detected object (310, 320, 330, 340, 350, 360) being used to determine the speed (101) of the vehicle (100) only when the relevant object (310, 320, 330, 340, 350, 360) has been assessed as stationary.

5. Method according to one of the preceding claims,
**characterized in that**
the relative speed (311, 321, 331, 341, 351, 361) of the detected object (310, 320, 330, 340, 350, 360) is compared with a reference speed,
the relevant relative speed (311, 321, 331, 341, 351, 361) being used to determine the speed (101) of the vehicle (100) only when it corresponds substantially to the reference speed.

6. Method according to Claim 5,
**characterized in that**
the speed (101) of the vehicle (100) is recurrently determined,
that value of the speed (101) of the vehicle (100) which was determined last respectively being used as the reference speed.

7. Method according to Claim 5 or 6,
**characterized in that**
the relative speeds (311, 321, 331, 341, 351, 361) of a plurality of objects (310, 320, 330, 340, 350, 360) detected in the environment of the vehicle (100) are measured at the same time or in succession,
the reference speed being determined using a mean value formed from the relative speeds (311, 321, 331, 341, 351, 361) of the detected objects (310, 320, 330, 340, 350, 360).

8. Method according to one of the preceding claims,
**characterized in that**
the reference speed is determined using a speed of the vehicle (100) determined using a reference sensor (250, 260, 270), the reference sensor (250, 260, 270) using the reflection of optical radiation on the ground, the reflection of sound waves on the ground, the wheel speed and/or satellite navigation to determine the reference speed.

9. Method according to one of the preceding claims,
**characterized in that**
the speed (101) of the vehicle (100) is determined using the measured relative speed (311, 321, 331, 341, 351, 361) of objects (310, 320, 330, 340, 350, 360) which are in front of and/or behind the vehicle (100) in the direction of travel.

10. Method according to one of the preceding claims,
**characterized in that**
in order to detect the objects (310, 320, 330, 340, 350, 360) in the environment of the vehicle (100) is carried out with the aid of an optical, acoustic and/or radar-based measuring method.

11. Method according to one of the preceding claims,
**characterized in that**
the relative speed (311, 321, 331, 341, 351, 361) of the detected objects (310, 320, 330, 340, 350, 360) is measured with the aid of a measuring method based on the Doppler effect.

12. Apparatus for determining the speed (101) of a vehicle (100), comprising:
- a first sensor device (210, 230) for detecting objects (310, 320, 330, 340, 350, 360) in the environment of the vehicle (100),
- a second sensor device (220, 240) for measuring the relative speed (311, 321, 331, 341, 351, 361) of the detected object (310, 320, 330, 340, 350, 360) with respect to the vehicle (100), and
- an evaluation device (280) for determining the speed (101) of the vehicle (100) using the measured relative speed (311, 321, 331, 341, 351, 361) of the object (310, 320, 330, 340, 350, 360), that the evaluation device (280) is designed to determine an individual probability of the object being a stationary object for each of the detected objects (310, 320, 330, 340, 350, 360),
the evaluation device (280) also being designed to take into account only those objects (310, 320, 330, 340, 350, 360) with the highest probability when determining the speed (101) of the vehicle (100).

## Revendications

1. Procédé de détermination de la vitesse (101) d'un véhicule (100),
dans lequel des objets (310, 320, 330, 340, 350, 360) sont détectés dans l'environnement du véhicule (100) et leurs vitesses relatives par rapport au véhicule (10) sont mesurées, et
dan lequel la vitesse (101) du véhicule (100) est déterminée sur la base des vitesses relatives (311, 321, 331, 341, 351, 361) des objets (310, 320, 330, 340, 350, 360),
**caractérisé en ce que**, pour chacun des objets (310, 320, 330, 340, 350, 360) détectés, une probabilité individuelle qu'il s'agit d'un objet stationnaire est déterminée,
dans lequel, lors de la détermination de la vitesse (101) du véhicule (100), il est uniquement tenu compte des objets (310, 320, 330, 340, 350, 360) qui présentent la probabilité la plus élevée.

2. Procédé selon la revendication 1,
**caractérisé en ce qu'**il est associé à un objet (310, 320, 330, 340, 350, 360) une probabilité d'autant plus élevée qu'il s'agit d'un objet stationnaire que la concordance entre la vitesse relative (311, 321, 331, 341, 351, 361) déterminée pour ledit objet (310, 320, 330, 340, 350, 360) et la vitesse de référence diminue.

3. Procédé selon la revendication 1 ou 2, **caractérisé en ce que** la probabilité qu'un objet reconnu (310, 320, 330, 340, 350, 360) est un objet stationnaire est associée à un objet reconnu (310, 320, 330, 340, 350, 360) sur la base de la forme ou de la position de l'objet (310, 320, 330, 340, 350, 360) respectif.

4. Procédé selon l'une quelconque des revendications précédentes,
**caractérisé en ce qu'**il est déterminé si l'objet (310, 320, 330, 340, 350, 360) détecté est un objet stationnaire ou en mouvement et dans lequel la vitesse relative (311, 321, 331, 341, 351, 361) de l'objet (310, 320, 330, 340, 350, 360) détecté n'est utilisée que pour déterminer la vitesse (101) du véhicule (100) lorsqu'il a été déterminé que l'objet (310, 320, 330, 340, 350, 360) concerné est stationnaire.

5. Procédé selon l'une quelconque des revendications précédentes,
**caractérisé en ce que** la vitesse relative (311, 321, 331, 341, 351, 361) de l'objet (310, 320, 330, 340, 350, 360) détecté est comparée à une vitesse de référence, et
dans lequel la vitesse relative (311, 321, 331, 341, 351, 361) concernée n'est utilisée pour déterminer la vitesse (101) du véhicule (100) lorsque celle-ci correspond sensiblement à la vitesse de référence.

6. Procédé selon la revendication 5,
**caractérisé en ce que** la vitesse (101) du véhicule (100) est déterminée périodiquement, et
dans lequel la dernière valeur déterminée de la vitesse (101) du véhicule (100) est utilisée en tant que vitesse de référence.

7. Procédé selon la revendication 5 ou 6, **caractérisé en ce que** les vitesses relatives (311, 321, 331, 341, 351, 361) de plusieurs objets (310, 320, 330, 340, 350, 360) détectées dans l'environnement du véhicule (100) sont mesurées simultanément ou consécutivement,
dans lequel la vitesse de référence est déterminée sur la base d'une valeur moyenne établie à partir de vitesses relatives (311, 321, 331, 341, 351, 361) des objets (310, 320, 330, 340, 350, 360) détectés.

8. Procédé selon l'une quelconque des revendications précédentes,
**caractérisé en ce que** la vitesse de référence est déterminée sur la base d'une vitesse obtenue au moyen d'un capteur de référence (250, 260, 270) du véhicule (100), dans lequel le capteur de référence (250, 260, 270) utilise la réflexion d'un rayonnement optique sur le sol, la réflexion d'ondes acoustiques sur le sol, la vitesse de rotation des roues ou la navigation par satellite pour déterminer la vitesse de référence.

9. Procédé selon l'une quelconque des revendications précédentes,
**caractérisé en ce que** la vitesse (101) du véhicule (100) est déterminée sur la base de la vitesse relative (311, 321, 331, 341, 351, 361) mesurée d'objets (310, 320, 330, 340, 350, 360) qui se trouvent dans la direction de déplacement vers l'avant et/ou vers l'arrière du véhicule (100).

10. Procédé selon l'une quelconque des revendications précédentes,
**caractérisé en ce que** pour la détection des objets (310, 320, 330, 340, 350, 360) dans l'environnement du véhicule (100) s'effectue à l'aide d'un procédé de mesure optique, acoustique et/ou à base de radar.

11. Procédé selon l'une quelconque des revendications précédentes,
**caractérisé en ce que** la mesure de la vitesse relative (311, 321, 331, 341, 351, 361) des objets (310, 320, 330, 340, 350, 360) détectés s'effectue à l'aide d'un procédé de mesure à base d'effet Doppler.

12. Dispositif de détermination de la vitesse (101) d'un véhicule (100), comprenant :
- un premier dispositif à capteur (210, 230) destiné à détecter des objets (310, 320, 330, 340, 350, 360) dans l'environnement du véhicule (100),
- un deuxième dispositif à capteur (220, 240) destiné à mesurer la vitesse relative (311, 321, 331, 341, 351, 361) de l'objet (310, 320, 330, 340, 350, 360) détecté par rapport au véhicule (100), et
- un dispositif d'évaluation (280) destiné à déterminer la vitesse (101) du véhicule (100) sur la base de la vitesse relative (311, 321, 331, 341, 351, 361) mesurée de l'objet (310, 320, 330, 340, 350, 360), le dispositif d'évaluation (280) étant conçu, pour chacun des objets (310, 320, 330, 340, 350, 360) détectés, pour déterminer une probabilité individuelle qu'il s'agisse d'un objet stationnaire,
dans lequel le dispositif d'évaluation (280) est en outre réalisé de manière à ne prendre en compte, lors de la détermination de la vitesse (101) du véhicule (100), que les objets (310, 320, 330, 340, 350, 360) présentant la probabilité la plus élevée.
